# EUROPEAN PATENT APPLICATION

(11) **EP 3 279 626 A1**
(43) Date of publication of application: **07.02.2018**
(21) Application number: 17183416.1
(22) Date of filing: 26.07.2017
(51) Int. Cl.: G01K 1/08, G01K 1/14

(54) **TEMPERATURE SENSOR WITH OVERMOLDED CONNECTOR**

(30) Priority: 02.08.2016 US 201615226600
(71) Applicant: Honeywell International Inc., Morris Plains, NJ 07950 (US)
(72) Inventor: KRISHNAMURTHY, Guruprasad, Morris Plains, NJ New Jersey 07950 (US); JEYSING, Anton, Morris Plains, NJ New Jersey 07950 (US); MUJUMDAR, Kishor, Morris Plains, NJ New Jersey 07950 (US); T, Kantharaju, Morris Plains, NJ New Jersey 07950 (US); JACOB, Lijo, Morris Plains, NJ New Jersey 07950 (US)
(74) Representative: Houghton, Mark Phillip

(57) **Abstract**

An internal combustion motor vehicle temperature sensor. The sensor comprises a metal mounting port having a threaded portion, an electrical terminal, a temperature sensing element electrically connected to the electrical terminal and enclosed within a cavity defined by the metal mounting port, and a plastic connector molded over the metal mounting port, where the plastic encases at least a portion of the electrical terminal and where the plastic connector defines a torque transfer shoulder.

## Description

### CROSS-REFERENCE TO RELATED APPLICATIONS

This application claims priority to U.S. Patent Application Serial No. 15/226,600 (entitled TEMPERATURE SENSOR WITH OVERMOLDED CONNECTOR, filed August 2, 2016), which is incorporated herein by reference.

### STATEMENT REGARDING FEDERALLY SPONSORED

### RESEARCH OR DEVELOPMENT

Not applicable.

### REFERENCE TO A MICROFICHE APPENDIX

Not applicable.

### BACKGROUND

Mass produced cars and trucks use temperature sensors in one or more places in the vehicle to detect, for example, one or more of engine coolant temperature, transmission oil temperature, intake air temperature, and the like. The temperature indications may be used by vehicle systems to detect and warn vehicle operators of vehicle conditions that may damage the vehicle (e.g., engine overheating) or that may be dangerous. The temperature indications may be used by vehicle systems to adapt fuel air mixing systems and ignition timings to achieve fuel efficiency and/or performance objectives. These temperature sensors may be manufactured in large quantities for use by a variety of different vehicle manufacturers and in a variety of vehicles. Desirably, the temperature sensors are inexpensive, compact, amenable to installation on an assembly line, and reliable. Further, temperature sensors are used in aerospace applications including engines, auxiliary power units, environmental control systems, and/or braking systems; industrial applications in oil refineries, air compressors, food industry equipment, injection molding, metal processing, and other industries that have temperature critical processes.

### SUMMARY

In an embodiment, a temperature sensor is disclosed. The sensor comprises a metal mounting port having a threaded portion, an electrical terminal, a temperature sensing element electrically connected to the electrical terminal and enclosed within a cavity defined by the metal mounting port, and a plastic connector molded over the metal mounting port, where the plastic encases at least a portion of the electrical terminal and where the plastic connector defines a torque transfer shoulder. In an embodiment, the metal mounting port is a forged metal mounting port.

In another embodiment, a system is disclosed. The system comprises a temperature sensor that comprises a metal mounting port having a threaded portion and having a shoulder for supporting the metal mounting port in a plastic injection mold machine during fabrication, an electrical terminal, a temperature sensing element electrically connected to the electrical terminal and enclosed within a cavity defined by the metal mounting port, and a plastic connector molded over the metal mounting port, where the plastic encases at least a portion of the electrical terminal and where the plastic connector defines a torque transfer shoulder. In another embodiment, the system further comprises an engine into which the sensor is installed. In another embodiment, the system further comprises a motor vehicle into which the engine is installed. In an embodiment, the metal mounting port is a forged metal mounting port.

In yet another embodiment, a temperature sensor is disclosed. The sensor comprises a metal mounting port having a threaded portion and an open end comprising axial ribs, an electrical terminal, a temperature sensing element electrically connected to the electrical terminal and enclosed within a cavity defined by the metal mounting port, and a plastic connector molded over the metal mounting port, where the plastic encases at least a portion of the electrical terminal and where the plastic connector defines a torque transfer shoulder. In an embodiment, the metal mounting port is a forged metal mounting port.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is an illustration of a temperature sensor in cross-section view according to an embodiment of the disclosure.
FIG. 2A is an illustration of a metal port according to an embodiment of the disclosure.
FIG. 2B is an illustration of a temperature sensor according to an embodiment of the disclosure.
FIG. 2C is an illustration of a metal port and a relationship between an engagement feature of the metal port and a torque transfer shoulder of an overmolded plastic connector according to an embodiment of the disclosure.
FIG. 3 is an illustration of another metal part according to an embodiment of the disclosure.
FIG. 4 is an illustration of yet another metal part according to an embodiment of the disclosure.
FIG. 5A is an illustration of a forged metal part prior to machining according to an embodiment of the disclosure.
FIG. 5B is an illustration of a forged metal part after machining according to an embodiment of the disclosure.
FIG. 6A is an illustration of a first phase of a temperature sensor manufacturing process according to an embodiment of the disclosure.
FIG. 6B is an illustration of a second phase of a temperature sensor manufacturing process according to an embodiment of the disclosure.
FIG. 6C is an illustration of a third phase of a temperature sensor manufacturing process according to an embodiment of the disclosure.
FIG. 7 is an illustration of an exemplary use of a temperature sensor in a motor vehicle according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

The present disclosure teaches a temperature sensor that incorporates novel structures that promote reducing sensor unit costs. The cost reduction process is focused on reducing subassembly part count and on reducing processing steps in manufacturing. The interplay between these cost reduction tactics and the novel structures that are the subject of the patent claims will be commented upon hereinafter, but it is pointed out that it is the novel structures and process steps that are claimed and not the cost reduction tactics *per se.*

The temperature sensor comprises a metal part (i.e., a metal mounting port) that retains a temperature sensing element in an interior cavity and has threads configured for screwing into a motor vehicle system, for example, a threaded receptacle in an engine block. The temperature sensing element may be a thermistor or other temperature transducer. The temperature sensing element is operable to transduce temperature to an electrical state or property. The temperature sensor further comprises an overmolded plastic connector that comprises a torque transfer shoulder. The overmolded plastic connector may be formed by injection of plastic material into a mold that retains the metal part, the temperature sensing element, temperature sensing element wires, and temperature sensing element terminals. The injection molding process is performed while the metal part is maintained in a vertical position. The injected plastic material flows into the mold, into the interior cavity of the metal part, surrounds the temperature sensing element and temperature sensing element wires, and partially surrounds the temperature sensing element terminals. The metal part defines a shoulder on which the part rests in the mold and is secured to the mold by engagement pistons during the injection molding process.

The torque transfer shoulder of the overmolded plastic connector may be used by assembly tools to screw the temperature sensor into the motor vehicle system and to tighten to a desired torque specification. The torque transfer shoulder may have a hexagonal shape, a pentagonal shape, a square shape, or some other shape suitable for being engaged by mass assembly tools. The metal part may comprise ribs, ridges, lands, protruding studs, and/or protruding buttons over which the torque transfer shoulder is molded. These features of the metal part may aid in transferring torque from the torque transfer shoulder to the metal part.

In an embodiment, the metal part (i.e., metal mounting port) is a forged metal part. By using a forged metal part, machining operations involved in manufacturing the temperature sensor can be reduced, and material wastage can be reduced. For example, prior art methods machined like metal parts out of bar stock, which wasted the metal removed during basic shaping of the part and consumed time. By relying on a torque transfer shoulder in the overmolded connector, the process step of machining a hex shape on the forged metal part can be avoided, saving machining time and wasted metal. The ribs, ridges, lands, studs, or buttons described above may be provided in the forged metal part before machining. Alternatively, in other embodiments the metal part (i.e., metal mounting port) may be made by a different process, for example by die casting, machining, MIM, or other process.

Prior art methods may use a plastic jig in which the temperature sensing element, temperature sensing element wires, and temperature sensing element terminals are retained. This plastic jig may then support the metal part when it is placed over the temperature sensing element during injection molding. The present disclosure teaches omitting the jig, thereby reducing a part count and saving the time of inserting the temperature sensing element, temperature sensing element wires, and temperature sensing element terminals into the jig. The shoulder defined by the metal part assumes the role of providing support for the metal part (instead of the jig) during injection molding. In an embodiment, the temperature sensing element wires use heavier gauge wire, relative to the prior art, to support the temperature sensing element and the temperature sensing element wires during the initial phases of injection molding.

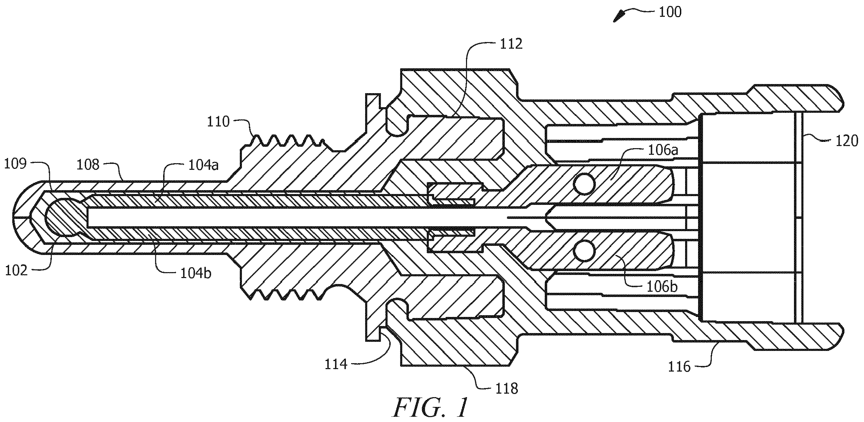

Turning now to FIG. 1, a temperature sensor 100 is described. The temperature sensor 100 may be suitable for mass manufacturing and for assembly into one or more systems of a motor vehicle, such as an automobile, a truck, a bus, a sport utility vehicle, a minivan, a power boat, an item of construction equipment, and other motor vehicles comprising internal combustion engines. Further, the temperature sensor may be used in aerospace applications including engines, auxiliary power units, environmental control systems, and/or braking systems; industrial applications in oil refineries, air compressors, food industry equipment, injection molding, metal processing, and other industries that have temperature critical processes.

In an embodiment, the sensor 100 comprises a metal mounting port 108, a temperature sensing element component 102, temperature sensing element wires 104, temperature sensing element terminals 106, and an overmolded plastic connector 116. The temperature sensing element wires comprise a first temperature sensing element wire 104a connected to a first temperature sensing element terminal 106a and a second temperature sensing element wire 104b connected to the second temperature sensing element terminal 106b. The temperature sensing element wires 104 may be connected to the temperature sensing element terminals 106 by solder, welding, crimping, or by another connection. In some contexts, the temperature sensing element terminals 106 may be referred to as electrical terminals. In an embodiment, the temperature sensing element component 102 may be a thermistor.

The metal mounting port 108 defines an interior cavity 109, a threaded portion 110, a shoulder 114, and a torque engagement feature 112. The torque engagement feature 112 may take a variety of implementations which are discussed further below. The torque engagement feature 112 promotes transfer of torque applied to a torque transfer shoulder 118 of the overmolded plastic connector 116 to the threaded portion 110 while avoiding the overmolded plastic connector 116 slipping over the metal mounting port 108. The overmolded plastic connector 116 defines a connector receptacle 120. The ends of the temperature sensing element terminals 106 project free of the interior of the overmolded plastic connector 116 and are configured to mate with an electrical socket that is plugged into the sensor 100, for example, a portion of an electrical wiring harness of a motor vehicle.

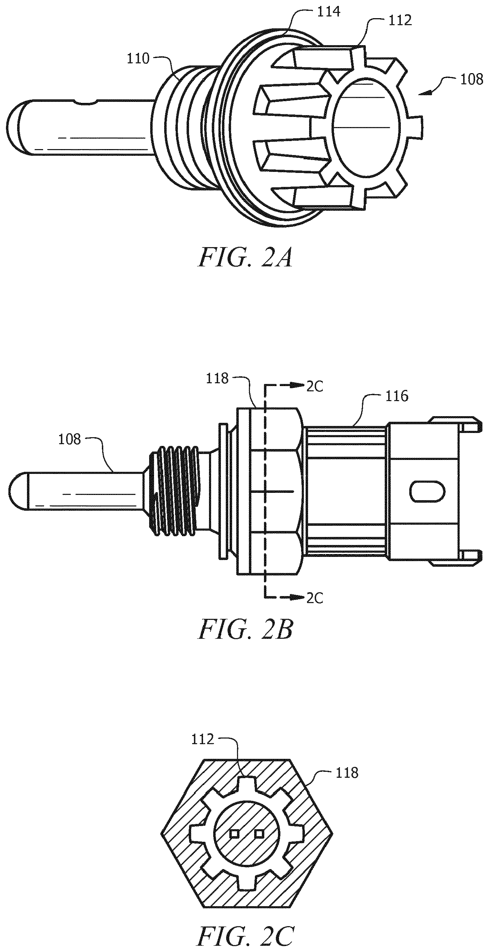

Turning now to FIG. 2A-FIG. 2C, further details of the temperature sensor 100 are described. The metal mounting port 108 is seen to comprise the threaded portion 110, the engagement feature 112, and the shoulder 114. In FIG. 2A and FIG. 2C, the engagement feature 112 is illustrated as ribs or slots, but it is understood that in some embodiments, different shapes may be employed to provide the desired engagement and no-slip behavior. The torque transfer shoulder 118 is illustrated in FIG. 2B and FIG. 2C as a hexagonal shape, but it is understood that in another embodiment, the torque transfer shoulder 118 may take other shapes, such as pentagonal, square, or other shapes. The right hand side of FIG. 2B best illustrates the no slip structure of the mating between the engagement feature 112 and the torque transfer shoulder 118 of the overmolded plastic connector 116. It is understood that the plastic of the overmolded plastic connector 116 fills into the interstices of the engagement feature 112 during injection molding formation of the overmolded plastic connector 116. FIG. 2C best illustrates the relationship between the engagement feature 112 and the overmolded plastic connector 116 and more specifically how torque applied (e.g., by a power tool or hand operated wrench) to the torque transfer shoulder 118 of the overmolded plastic connector 116 may be transferred to the engagement feature 112 and hence to the metal mounting port 108, for example to tighten the temperature sensor 100 into a threaded receiving hole.

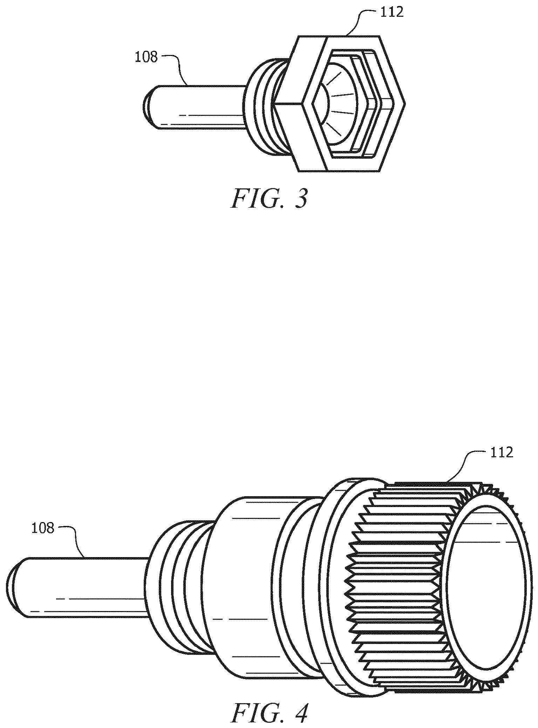

Turning now to FIG. 3, an alternative embodiment of the engagement feature 112 of the metal mounting port 108 is described. In an embodiment, the engagement feature 112 may take a hexagonal shape over which the overmolded plastic connector 116 is injection molded.

Turning now to FIG. 4, another alternative embodiment of the engagement feature 112 of the metal mounting port 108 is described. In an embodiment, the engagement feature 112 may take a knurled shape over which the overmolded plastic connector 116 is injection molded.

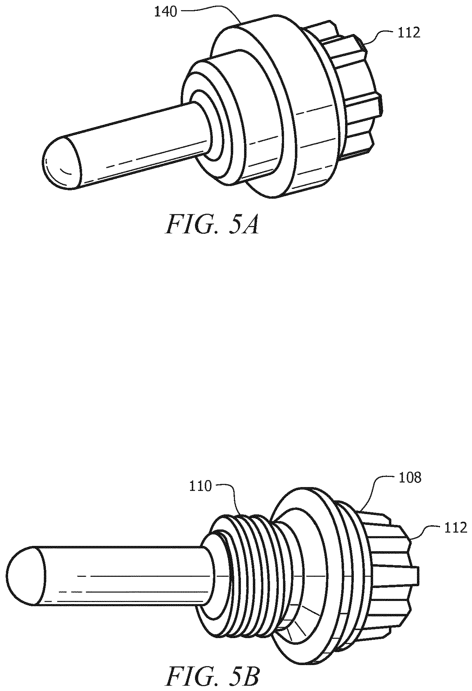

In some but not all embodiments, the metal mounting port 108 is a forged metal part. Turning now to FIG. 5A and FIG. 5B, a forged metal mounting port 108 is discussed. In FIG. 5A, the forged metal mounting port 108 is depicted prior to machining as forging 140. The general shape of forging 140 conforms generally with the finished machined shape of the forged metal mounting port 108. Considering that the prior art port is made from bar stock, it can readily be appreciated that less waste metal is generated in machining the forged metal mounting port 108 out of the forging 140 than in machining the same item from bar stock and further machining a hexagonal shape as in the prior art. In the forged metal mounting port 108 of the present disclosure, the engagement feature 112 is cast into the forged metal mounting port 108 during forging. In FIG. 5B, the forging 140 depicted in FIG. 5A is machined to provide the threaded portion 110. While these features cannot be seen in FIG. 5B, the machining of the forged metal mounting port 108 further provides the shoulder 114 and the interior cavity 109. The forged metal mounting port 108 may comprise aluminum, steel, stainless steel, brass, and/or other metals.

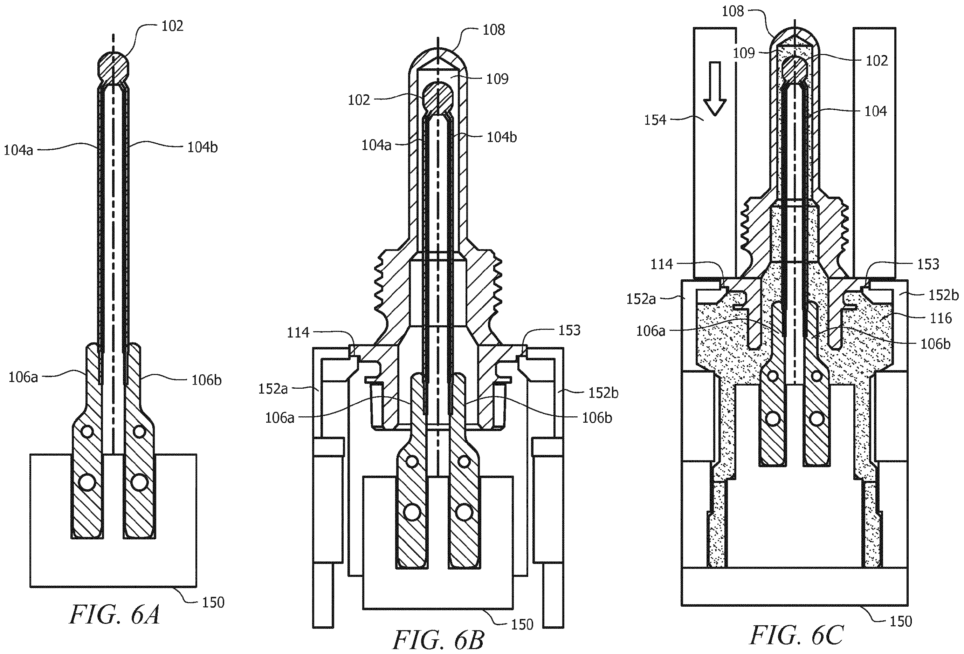

Turning now to FIG. 6A, FIG. 6B, and FIG. 6C, injection molding of the overmolded plastic connector 116 is described. The temperature sensing element 102 may be sourced from a supplier with temperature sensing element wires 104. The temperature sensing element wires 104 may be of a sufficient stoutness to support the temperature sensing element 102 in a vertical alignment, without the use of a jig. In an embodiment, the temperature sensing element wires 104 may be 26 AWG gauge wire. Alternatively, the temperature sensing element wires 104 may be 28 AWG gauge wire. Alternatively, the temperature sensing element wires may be 24 AWG gauge wires. The temperature sensing element wires 104 may be connected to the temperature sensing element terminals 106. As illustrated in FIG. 6A, the temperature sensing element terminals 106 are installed into a replaceable tool insert 150 in a plastic injection molding machine. The assembly of the temperature sensing element 102, the temperature sensing element wires 104, and the temperature sensing element terminals 106 as illustrated in FIG. 6A may be said to be a jigless assembly. In FIG. 6B, side core components 152a and 152b are positioned, and the shoulder 114 of the metal mounting port 108 is placed on a receiving lip 153 of the side core component 152. The receiving lip 153 supports the metal mounting port 108 and hence holds the port 108 off of the temperature sensing element 102 and temperature sensing element wires 104.

In FIG. 6C, a portion 154 of the injection molding machine is deployed to hold the metal mounting port 108 securely on the side core components 152. The overmolded plastic connector 116 is then formed by injecting plastic material into the side core components 152 and into the interior cavity 109 of the metal mounting port 108. The plastic that flows into the interior cavity 109 of the metal mounting port 108 both mechanically stabilizes the temperature sensing element 102 and temperature sensing element wires 104 as well as electrically insulating and/or isolating the wires 104. The temperature sensing element 102 and temperature sensing element wires 104 may be said to be enclosed in the interior cavity 109 in a jigless assembly. In an embodiment, thermal heat transfer paste may first be injected into the interior cavity 109 of the metal mounting port 108, and then the plastic may be injected to complete the overmolded plastic connector 116. Such thermal heat transfer paste may comprise one or more of silicon paste, epoxy, silicone RTV, and/or other materials. The plastic may comprise plastic resins, epoxies, thermoset materials, or ceramics.

After the overmolded plastic connector 116 has been formed, the sensor 100 is removed from the injection molding machine. Some surplus plastic material may be removed after freeing the sensor 100 from the injection molding machine, for example, possibly after the overmolded plastic connector 116 has cooled.

A method of making or manufacturing the sensor 100 may comprise the following. The metal mounting port 108 is provided. The metal mounting port 108 is machined to define the threaded portion 110 and to define the interior cavity 109. The temperature sensing element terminals 106 are inserted into the replaceable tool insert 150 that is held in a plastic injection molding machine. The temperature sensing element wires 104 and the temperature sensing element extend upwards from the injection molding machine. The metal mounting port 108 is placed over the temperature sensing element 102 and temperature sensing element wires 104, and the shoulder 114 of the metal mounting port 108 is supported on the receiving lip 153 of the side component 152 of the injection molding machine. In some embodiments, the temperature sensing element 102 and the temperature sensing element wires 104 may not be supported by any other or additional part or carrier during a subsequent molding process. A portion 154 of the injection molding machine deploys to engage with and hold in place the metal mounting port 108 on the side core components 152. Plastic or resin is injected into the injection molding machine and into and over the metal mounting port 108 to form the overmolded plastic connector 116. In an embodiment, thermal heat transfer paste may be flowed into or injected into the interior cavity 109 before injecting plastic or resin into the injection molding machine. The plastic flows over and engages closely with the torque engagement feature 112 of the metal mounting port 108 and further forms the torque transfer shoulder 118 of the overmolded plastic connector 116. The manufactured sensor 100 is then removed from the injection molding machine and is ready for use. In embodiment, the overmolded plastic connector 116 is worked to remove any burrs or flashing.

A method of using the sensor 100 may comprise one or more of the following actions. One or more sensors 100 is installed into a motor vehicle, for example into an engine block, into an engine oil pan, or into a transmission. For example, this may be performed during manufacturing or assembling of the motor vehicle. The engine of the motor vehicle is turned on. One or more of the sensors 100 disposed in the vehicle is heated. For example, coolant circulating in the engine absorbs heat of fuel combustion from the block of the engine, and the coolant transfers heat to the sensor 100. The sensor 100 senses or determines a temperature of the engine block or of the coolant and provides an indication of that temperature, for example to an in-vehicle central computer, to an engine control system, or to one or more other systems. Likewise, the sensor 100 may sense or determine an engine oil temperature and provide an indication of that temperature to a central computer, engine control system, or other system. Likewise, the sensor 100 may sense or determine a transmission oil or fluid temperature and provide an indication of that temperature to a central computer, engine control system, or other system.

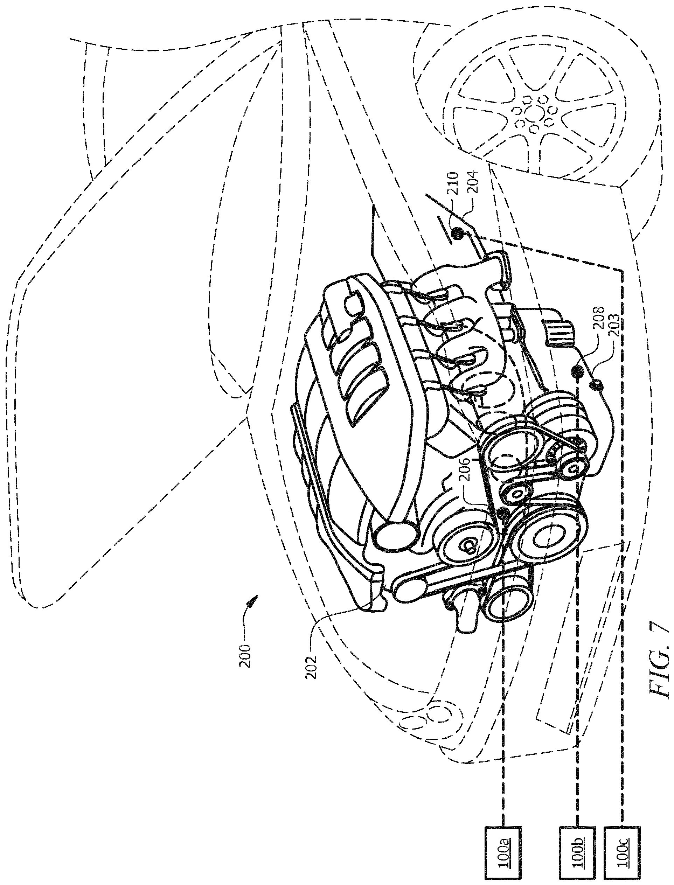

Turning now to FIG. 7, a motor vehicle 200 is described. In an embodiment, the motor vehicle 200 comprises an engine comprising an engine block 202 and an engine oil pan 203. The motive force (e.g., torque) of the engine may be transferred to drive wheels of the vehicle 200 by a transmission 204. It is understood that the motor vehicle 200, engine block 202, engine oil pan 203, and transmission 204 may have different configurations than those illustrated in FIG. 7. For example, the motor vehicle may have a different form than an automobile, for example the form of a pick-up truck, a sport utility vehicle, a minivan, a delivery truck, a tractor unit of a tractor trailer rig, a bus, or other motor vehicle powered by an internal combustion engine.

In an embodiment, the engine block 202 has a first temperature sensor receptacle 206 into which a first temperature sensor 100a may be assembled. The first temperature sensor 100a may sense an engine coolant temperature or an engine block temperature and provide the temperature sense value to another component of the vehicle 200, for example to a control unit of the vehicle 200, such as a fuel control system or a central computing system of the vehicle 200. The temperature sense value may be used to modulate engine operation parameters, such as a control input to determine a fuel air mix or other engine operation parameter. The temperature sense value may be used to provide a temperature indication in a dashboard of the vehicle 200. The temperature sense value may be used to generate an engine temperature overheat alert light indication in the dashboard or elsewhere in the vehicle 200. It is understood that the first temperature sensor receptacle 206 may be located anywhere in the engine block 202 or in a coolant system.

In an embodiment, the engine oil pan 203 has a second temperature sense receptacle 208 into which a second temperature sensor 100b may be assembled. The second temperature sensor 100b may sense an engine oil temperature and provide the oil temperature sense value to a control unit of the vehicle 200 and/or to a dashboard of the vehicle 200. It is understood that the second temperature sense receptacle 208 may be located anywhere in the oil pan 203 or in a flow path of the engine oil. In an embodiment, the transmission 204 has a third temperature sense receptacle 210 into which a third temperature sensor 100c is assembled. The third temperature sensor 100c may sense a transmission oil or transmission fluid temperature and provide the transmission temperature to a control unit of the vehicle 200 and/or to a dashboard of the vehicle 200. It is understood that the third temperature sense receptacle 210 may be located anywhere in the transmission 204 or in the flow path of the transmission oil or fluid. It will be appreciated that while the above description of assembling the temperature sensor 100 into a system was written directed to the use case of an internal combustion engine, like assembly processes may be used to insert the temperature sensors into other systems, such as in aerospace applications including engines, auxiliary power units, environmental control systems, and/or braking systems; industrial applications in oil refineries, air compressors, food industry equipment, injection molding, metal processing, and other industries that have temperature critical processes.

The temperature sensors 100a, 100b, 100c may be provided using any of the temperature sensors described above. The temperature sensors 100a, 100b, 100c may be assembled into the vehicle 200 by inserting the end of the metal mounting port 108 into the appropriate receptacle 206, 208, 210 and threading the threaded portion of the sensor into the threads of the receptacle 206, 208, 210. One or more of the temperature sensors 100a, 100b, 100c may be assembled into the vehicle 200 during manufacture and/or assembly of the vehicle, for example by a pneumatic power wrench that engages with the torque transfer shoulder 118 of the sensor 100a, 100b, 100c. In some contexts, FIG. 7 may be said to illustrate a system, where the system comprises a temperature sensor, an engine in which the temperature sensor is disposed, and a motor vehicle in which the engine is disposed.

Having described various methods and systems herein, specific embodiments can include, but are not limited to:

In a first embodiment, a temperature sensor comprises: a metal mounting port having a threaded portion; an electrical terminal; a temperature sensing element electrically connected to the electrical terminal and enclosed within a cavity defined by the metal mounting port; and a plastic connector molded over the metal mounting port, where the plastic encases at least a portion of the electrical terminal and where the plastic connector defines a torque transfer shoulder.

A second embodiment can include the sensor of the first embodiment, wherein the sensor is a mass produced sensor.

A third embodiment can include the sensor of the first embodiment, wherein the sensor is operable for use in sensing one of engine coolant temperature, engine oil temperature, or transmission oil temperature.

A fourth embodiment can include the sensor of the third embodiment, wherein the torque transfer shoulder defines a hexagonal shape, and wherein the metal mounting port defines a torque engagement feature.

A fifth embodiment can include the sensor of the fourth embodiment, wherein the torque engagement feature of the metal mounting port is one of a ribbed feature and a knurled feature.

A sixth embodiment can include the sensor of the fourth embodiment, wherein the metal mounting port further comprises a shoulder for supporting the metal mounting port in a plastic injection mold machine during fabrication.

A seventh embodiment can include the sensor of the first embodiment, wherein the temperature sensing element is configured to be assembled into the cavity without a jig.

An eighth embodiment can include the sensor of the first embodiment, wherein the plastic of the plastic connector molded over the metal mounting port fills the cavity defined by the mounting port around the temperature sensing element.

A ninth embodiment can include the sensor of the first embodiment, wherein a thermal heat transfer paste fills an end of the cavity defined by the metal mounting port around the temperature sensing element and the plastic of the plastic connector molded over the metal mounting port partially fills the remainder of the cavity that is not filled with the thermal heat transfer paste.

A tenth embodiment can include the sensor of the first embodiment, wherein a metal housing is disposed around the sensing element.

An eleventh embodiment can include the sensor of the first embodiment, wherein the metal housing is made of a single integral part or an assembly of many parts of any combination of materials and manufacturing methods.

A twelfth embodiment can include the sensor of the first embodiment, wherein the sensing element is attached to electrical terminals by any means of fusion and non-fusion joining methods like crimping, auto splicing, welding, brazing, and/or soldering.

A thirteenth embodiment can include the sensor of the first embodiment, wherein the sensing element is attached to electrical terminals by any means, such as additional electrical wire, ribbon, or rods, with or without wire insulation.

A fourteenth embodiment can include the sensor of the first embodiment, wherein the metal housing is of any ferrous or non-ferrous type of material.

A fifteenth embodiment can include the sensor of the first embodiment, wherein the metal housing has a connection mechanism, such as threads, flanges, or the like.

A sixteenth embodiment can include the sensor of the first embodiment, wherein the metal housing has a variety of sensor tip shapes like straight, stepped diameters, finned, and/or the sensor tip has perforated holes.

In a seventeenth embodiment, a system comprises a temperature sensor, comprising: a metal mounting port having a threaded portion and having a shoulder for supporting the metal mounting port in a plastic injection mold machine during fabrication; an electrical terminal; a temperature sensing element electrically connected to the electrical terminal and enclosed within a cavity defined by the metal mounting port; and a plastic connector molded over the metal mounting port, where the plastic encases at least a portion of the electrical terminal and where the plastic connector defines a torque transfer shoulder.

An eighteenth embodiment can include the system of the seventeenth embodiment, further comprising an engine in which the temperature sensor is disposed.

A nineteenth embodiment can include the system of the eighteenth embodiment, further comprising a motor vehicle in which the engine is disposed.

A twentieth embodiment can include the system of the seventeenth embodiment, wherein the plastic connector molded over the metal mounting port fills the cavity defined by the metal mounting port and surrounds the temperature sensing element.

A twenty first embodiment can include the system of the twentieth embodiment, wherein the temperature sensing element is configured to be enclosed in the cavity in a jigless assembly.

A twenty second embodiment can include the system of the seventeenth embodiment, wherein the metal mounting port comprises a torque engagement feature.

A twenty third embodiment can include the system of the twenty second embodiment, wherein the torque engagement feature of the metal mounting port is one of a ribbed feature and a knurled feature.

In a twenty fourth embodiment, a temperature sensor comprises: a metal mounting port having a threaded portion and an open end comprising axial ribs; an electrical terminal; a temperature sensing element electrically connected to the electrical terminal and enclosed within a cavity defined by the metal mounting port; and a plastic connector molded over the metal mounting port, where the plastic encases at least a portion of the electrical terminal and where the plastic connector defines a torque transfer shoulder.

A twenty fifth embodiment can include the temperature sensor of the twenty fourth embodiment, wherein the temperature sensing element is electrically connected to the electrical terminal by two wires.

A twenty sixth embodiment can include the temperature sensor of the twenty fifth embodiment, wherein the two wires are 26 AWG gauge wires.

A twenty seventh embodiment can include the temperature sensor of the twenty fourth embodiment, wherein the torque transfer shoulder has a hexagonal shape.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system, or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A temperature sensor (100), comprising:
a metal mounting port (108) having a threaded portion 110);
an electrical terminal (106);
a temperature sensing element (102) electrically connected to the electrical terminal (106) and enclosed within a cavity (109) defined by the metal mounting port (108); and
a plastic connector (116) molded over the metal mounting port (108), where the plastic encases at least a portion of the electrical terminal (106) and where the plastic connector (116) defines a torque transfer shoulder (118).

2. The sensor (100) of claim 1, wherein the sensor (100) is operable for use in sensing one of engine coolant temperature, engine oil temperature, or transmission oil temperature.

3. The sensor (100) of claim 2, wherein the torque transfer shoulder (118) defines a hexagonal shape and wherein the metal mounting port (108) defines a torque engagement feature (112).

4. The sensor (100) of claim 3, wherein the torque engagement feature (112) of the metal mounting port (108) is one of a ribbed feature and a knurled feature.

5. The sensor (100) of claim 3, wherein the metal mounting port (108) further comprises a shoulder (114) for supporting the metal mounting port (108) in a plastic injection mold machine during fabrication.

6. The sensor (100) of claim 1, wherein the temperature sensing element (102) is assembled into the cavity without a jig.

7. The sensor (100) of claim 1, wherein the plastic of the plastic connector (116) molded over the metal mounting port (108) fills the cavity (109) defined by the metal mounting port (108) around the temperature sensing element (102).

8. The sensor (100) of claim 1, wherein a thermal heat transfer paste fills an end of the cavity (109) defined by the metal mounting port (108) around the temperature sensing element (102) and the plastic of the plastic connector (116) molded over the metal mounting port (108) partially fills the remainder of the cavity (109) that is not filled with the thermal heat transfer paste.

9. A system , comprising:
a temperature sensor (100), comprising:
a metal mounting port (108) having a threaded portion (110) and having a shoulder (114) for supporting the mounting port (108) in a plastic injection mold machine during fabrication;
an electrical terminal (106);
a temperature sensing element (102) electrically connected to the electrical terminal (106) and enclosed within a cavity (109) defined by the metal mounting port (108); and
a plastic connector (116) molded over the metal mounting port (108), where the plastic encases at least a portion of the electrical terminal (106) and where the plastic connector (116) defines a torque transfer shoulder (118).

10. The system of claim 9, further comprising an engine (202) in which the temperature sensor (100) is disposed.

11. The system of claim 10, further comprising a motor vehicle (200) in which the engine (202) is disposed.

12. The system of claim 9, wherein the plastic connector (116) molded over the metal mounting port (108) fills the cavity (109) defined by the metal mounting port (108) and surrounds the temperature sensing element (102).

13. The sensor (100) of claim 9, wherein the metal mounting port (108) comprises a torque engagement feature (112).

14. A temperature sensor (100), comprising:
a metal mounting port (108) having a threaded portion (110) and an open end comprising axial ribs;
an electrical terminal (106);
a temperature sensing element (102) electrically connected to the electrical terminal (106) and enclosed within a cavity (109) defined by the metal mounting port (108); and
a plastic connector (116) molded over the metal mounting port (108), where the plastic encases at least a portion of the electrical terminal (106) and where the plastic connector (116) defines a torque transfer shoulder (118).

15. The sensor (100) of claim 14, wherein the temperature sensing element (102) is electrically connected to the electrical terminal (106) by two wires (104) wherein the two wires are 26 AWG gauge.
